# EUROPEAN PATENT SPECIFICATION

(11) **EP 3 608 125 B1**
(45) Date of publication and mention of the grant of the patent: **10.07.2024**
(21) Application number: 19188814.8
(22) Date of filing: 29.07.2019
(51) Int. Cl.: B60C 1/00, C08L 9/06, C08L 21/00, C08K 3/36, C08L 9/00, C08L 83/08, C08K 5/5398, C08K 5/40, C08K 5/39

(54) **RUBBER COMPOSITION FOR TREAD AND PNEUMATIC TIRE**
KAUTSCHUKZUSAMMENSETZUNG FÜR LAUFFLÄCHEN UND LUFTREIFEN
COMPOSITION DE CAOUTCHOUC POUR BANDE DE ROULEMENT ET PNEUMATIQUE

(30) Priority: 08.08.2018 JP 2018149351
(43) Date of publication of application: 12.02.2020
(73) Proprietor: SUMITOMO RUBBER INDUSTRIES, LTD., Kobe-shi, Hyogo 651-0072 (JP)
(72) Inventor: NAGASE, Takayuki, Kobe-shi, Hyogo 651-0072 (JP); TANAKA, Tatsuhiro, Kobe-shi, Hyogo 651-0072 (JP)
(74) Representative: TBK

(56) References cited:
- EP-A1- 3 178 877
- EP-A1- 3 300 921

## Description

### BACKGROUND OF THE INVENTION

### Field of the Invention

The present invention relates to a rubber composition for a tread and a pneumatic tire.

### Description of the Background Art

The tread of a pneumatic tire is required to have excellent wet grip performance. As a method for improving wet grip performance, a method in which the amount of a filler is increased is known. However, if the amount of the filler is increased, low fuel consumption performance tends to deteriorate. A method for improving wet grip performance by use of a special filler such as aluminum hydroxide in addition to general fillers such as carbon black and silica is also studied (for example, Japanese Laid-Open Patent Publication No. 2005-213353). However, this method could cause deteriorated abrasion resistance. Thus, it has been difficult to comprehensively improve low fuel consumption performance, wet grip performance, and abrasion resistance. EP3178877 discloses a rubber composition for a tread, which can achieve blowing resistance during dry running, wet grip performance, and abrasion resistance.

### SUMMARY OF THE INVENTION

The present invention has been made in order to solve the above problem. An object of the present invention is to provide a rubber composition, for a tread, capable of comprehensively improving low fuel consumption performance, wet grip performance, and abrasion resistance, and a pneumatic tire using the same.

The present invention is directed to a rubber composition for a tread, the rubber composition containing: a rubber component; and a silica having a nitrogen adsorption specific surface area of 200 to 250 m²/g, wherein an amount of the silica per 100 parts by mass of the rubber component is 70 to 120 parts by mass, a tanδ peak temperature is -25 to -15°C, tanδ at 50°C is 0.10 to 0.25, and tanδ at 0°C is 0.35 to 0.90.

The rubber composition contains a mercapto silane coupling agent.

The rubber composition contains a zinc dithiophosphate represented by Formula (1) below, 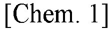 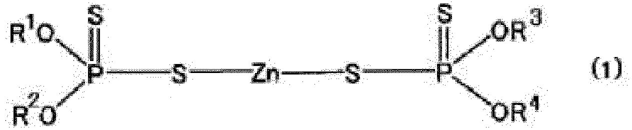 (where R¹ to R⁴ each independently represent a straight chain or branched chain alkyl group having 1 to 18 carbon atoms, or a cycloalkyl group having 5 to 12 carbon atoms.).

Preferably, in the rubber composition, an amount of a butadiene rubber having a cis content of not greater than 50% by mass is 5 to 60% by mass in 100% by mass of the rubber component.

Preferably, in the rubber composition, an amount of the zinc dithiophosphate represented by Formula (1) per 100 parts by mass of the rubber component is 0.3 to 5 parts by mass.

Preferably, the rubber composition contains a thiuram-based vulcanization accelerator and/or a dithiocarbamate-based vulcanization accelerator.

Preferably, the rubber composition contains a terpene-based resin.

The present invention is also directed to a pneumatic tire having a tread formed by the rubber composition.

According to the present invention, the rubber composition for a tread contains a rubber component and a silica having a nitrogen adsorption specific surface area of 200 to 250 m²/g, an amount of the silica per 100 parts by mass of the rubber component is 70 to 120 parts by mass, a tanδ peak temperature is -25 to -15°C, tanδ at 50°C is 0.10 to 0.25, and tanδ at 0°C is 0.35 to 0.90. Thus, low fuel consumption performance, wet grip performance, and abrasion resistance can be comprehensively improved.

### DESCRIPTION OF THE PREFERRED EMBODIMENTS

A rubber composition for a tread of the present invention contains a rubber component, and a silica having a nitrogen adsorption specific surface area of 200 to 250 m²/g. The amount of the silica per 100 parts by mass of the rubber component is 70 to 120 parts by mass, a tanδ peak temperature is -25 to -15°C, tanδ at 50°C is 0.10 to 0.25, and tanδ at 0°C is 0.35 to 0.90.

The present inventors have attempted to realize both wet grip performance and low fuel consumption performance by employing a method in which: the tan6 peak temperature of the rubber composition is set to be higher than that normally set, to improve wet grip performance; and the amount of the filler such as silica is reduced to improve low fuel consumption performance. However, with this method, due to the reduction in the amount of the filler, the effect of improving wet grip performance could be impaired, and abrasion resistance could tend to deteriorate, for example, thus, leaving room for improvement. Meanwhile, when the rubber composition has a tanδ peak temperature adjusted to be in the above range in which the tan6 peak temperature is lower than that normally set, rolling resistance is reduced, and low fuel consumption performance is improved. Accordingly, the reduction in the amount of the filler for ensuring low fuel consumption performance is not required, and further, preferable low fuel consumption performance can be maintained even if the amount of the filler is increased. Thus, wet grip performance and abrasion resistance can be improved, with the amount of the silica adjusted to be in the above range in which the amount of the silica is increased compared to that normally set.

In addition, since the silica having a nitrogen adsorption specific surface area in the above range is used, and tanδ at 50°C and tanδ at 0°C are in the above ranges, more preferable low fuel consumption performance, wet grip performance, and abrasion resistance can be obtained.

Due to the above-described action, it is considered that low fuel consumption performance, wet grip performance, and abrasion resistance can be comprehensively improved.

It is speculated that the reason why the rolling resistance is reduced by lowering the tan6 peak temperature is that, when the tan6 peak temperature is lowered, tanδ is reduced in a wide temperature range. Therefore, for example, when there are two kinds of rubber compositions which each have substantially the same tanδ at 50°C and which have different tanδ peak temperatures, the rubber composition that has the lower tanδ peak temperature is considered to have a smaller rolling resistance.

The tanδ peak temperature of the rubber composition only needs to be -25 to - 15°C, but is preferably not lower than -24°C, and is preferably not higher than -17°C, more preferably not higher than -19°C, and further preferably not higher than -21°C. When the tanδ peak temperature is within the above range, the effect tends to be more favorably achieved.

The tanδ peak temperature of the rubber composition is the temperature (glass transition temperature (Tg)) of the peak in the temperature distribution curve obtained by measuring, with respect to the rubber composition after vulcanization, tanδ in a temperature range of -100 to 100°C by use of a viscoelasticity spectrometer VES (manufactured by Iwamoto Seisakusho) under the conditions of an initial strain of 10%, an amplitude of ±0.5%, a frequency of 10 Hz, and a temperature rise rate of 2°C/min.

The tanδ peak temperature of the rubber composition can be adjusted by changing the blending contents (for example, changing the kind and the blending ratio of the rubber component, or adding a processing aid).

In the rubber composition, tanδ at 50°C only needs to be 0.10 to 0.25, but is preferably not less than 0.12 and more preferably not less than 0.13, and is preferably not greater than 0.20, more preferably not greater than 0.17, and further preferably not greater than 0.15. When tanδ at 50°C is within the above range, the effect tends to be more favorably achieved.

In the rubber composition, tanδ at 0°C only needs to be 0.35 to 0.90, but is preferably not less than 0.40 and more preferably not less than 0.42, and is preferably not greater than 0.70, more preferably not greater than 0.60, further preferably not greater than 0.55, and particularly preferably not greater than 0.48. When tanδ at 0°C is within the above range, the effect tends to be more favorably achieved.

Tanδ of the rubber composition is measured, with respect to the rubber composition after vulcanization, at each measurement temperature under the conditions of an initial strain of 10%, an amplitude of ±0.5%, and a frequency of 10 Hz by use of a viscoelasticity spectrometer VES (manufactured by Iwamoto Seisakusho).

Tan6 of the rubber composition can be adjusted by a method similar to that for the tan6 peak temperature.

Examples of the rubber component used in the rubber composition include diene-based rubbers such as styrene-butadiene-rubber (SBR), butadiene rubber (BR), isoprene-based rubber, acrylonitrile-butadiene rubber (NBR), chloroprene rubber (CR), isobutylene-isoprene-rubber (IIR), and styrene-isoprene-butadiene copolymer rubber (SIBR). One of these rubbers may be used individually, or two or more of these rubbers may be used in combination. Among them, SBR and BR are preferable.

The SBR is not particularly limited, and, for example, emulsion-polymerized styrene-butadiene-rubber (E-SBR), solution-polymerized styrene-butadiene-rubber (S-SBR), and the like can be used. One of these rubbers may be used individually, or two or more of these rubbers may be used in combination.

The styrene content of the SBR is preferably not less than 10% by mass and more preferably not less than 20% by mass, and is preferably not greater than 60% by mass, more preferably not greater than 40% by mass, and further preferably not greater than 30% by mass. When the styrene content of the SBR is within the above range, the effect tends to be more favorably achieved. The styrene content of the SBR can be measured by ¹H-NMR measurement.

The vinyl content of the SBR is preferably not less than 15% by mass and more preferably not less than 30% by mass, and is preferably not greater than 70% by mass, more preferably not greater than 50% by mass, and further preferably not greater than 40% by mass. When the vinyl content of the SBR is within the above range, the effect tends to be more favorably achieved. The vinyl content (1,2-bond butadiene unit content) of the SBR can be measured by infrared absorption spectrometry.

The weight average molecular weight (Mw) of the SBR is preferably not less than 400000 and more preferably not less than 500000, and is preferably not greater than 2 million and more preferably not greater than 1.8 million. When the Mw of the SBR is within the above range, the effect tends to be more favorably achieved.

The Mw can be obtained by conversion, based on polystyrene standard, of a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation).

The SBR may be either unmodified SBR or modified SBR. The modified SBR only needs to be SBR having a functional group that interacts with a filler such as silica, and examples of such modified SBR include end-modified SBR obtained by modifying at least one end of SBR with a compound (modifier) having the functional group (end-modified SBR having the functional group at an end thereof), main chain-modified SBR having the functional group in the main chain thereof, main chain/end-modified SBR having the functional group in the main chain and at an end thereof (for example, main chain/end-modified SBR that has the functional group in the main chain thereof and in which at least one end thereof is modified with the modifier), and end-modified SBR that is modified (coupled) by using a multifunctional compound having two or more epoxy groups in the molecule thereof and to which a hydroxyl group or an epoxy group is introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydroxyl group, an oxy group, and an epoxy group. These functional groups may have a substituent. Among them, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group are preferable.

Examples of a modifier used for the modified SBR include: polyglycidyl ethers of polyhydric alcohols such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3,-bisaminomethylcyclohexane;

Amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane;

Sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl]sulfide, (trimethylsilyl)[3-(methyldiethoxysilyl)propyl]sulfide, (trimethylsilyl)[3-(methyldipropoxysilyl)propyl]sulfide, and (trimethylsilyl)[3-(methyldibutoxysilyl)propyl]sulfide;

N-substituted azilidine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover,

N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone.

Modification with the above compounds (modifiers) can be carried out by a known method.

As the SBR, for example, SBRs manufactured by and available from Sumitomo Chemical Co., Ltd., JSR Corporation, Asahi Kasei Corporation, Zeon Corporation, etc., can be used.

In the case where the SBR is contained, the amount of the SBR in 100% by mass of the rubber component is preferably not less than 40% by mass, more preferably not less than 50% by mass, and further preferably not less than 60% by mass, and is preferably not greater than 95% by mass, more preferably not greater than 80% by mass, and further preferably not greater than 65% by mass. When the amount of the SBR is within the above range, the effect tends to be more favorably achieved.

The BR is not particularly limited. Examples of the BR include BRs that are generally used in the tire industry, such as BR having a high cis content (high cis BR), BR containing 1,2-syndiotactic polybutadiene crystal (SPB-containing BR), butadiene rubber synthesized by using a rare earth element catalyst (rare earth BR), and tin-modified butadiene rubber modified with a tin compound (tin-modified BR). These BRs can be used individually, or two or more of these BRs may be used in combination.

The cis content of the BR is preferably not greater than 99% by mass, more preferably not greater than 98% by mass, and further preferably not greater than 50% by mass, and is preferably not less than 20% by mass and more preferably not less than 30% by mass. When the cis content of the BR is within the above range, the effect tends to be more favorably achieved.

The cis content of the BR can be measured by infrared absorption spectrometry.

The trans content of the BR is preferably not greater than 60% by mass and more preferably not greater than 50% by mass, and is preferably not less than 1% by mass and more preferably not less than 2% by mass. When the trans content of the BR is within the above range, the effect tends to be more favorably achieved.

The trans content of the BR can be measured by infrared absorption spectrometry.

The vinyl content of the BR is preferably not greater than 30% by mass and more preferably not greater than 20% by mass. The lower limit is not particularly defined, and may be 0% by mass, and preferably not less than 1% by mass. When the vinyl content of the BR is within the above range, the effect tends to be more favorably achieved.

The vinyl content of the BR can be measured by infrared absorption spectrometry.

The weight average molecular weight (Mw) of the BR is preferably not less than 200000 and more preferably not less than 400000, and is preferably not greater than 800000 and more preferably not greater than 600000. When the weight average molecular weight of the BR is within the above range, the effect tends to be more favorably achieved.

The BR may be either unmodified BR or modified BR, but modified BR is preferable. Examples of the modified BR include modified BR into which the aforementioned functional group is introduced. As the functional group, an amino group (preferably, an amino group obtained by substituting a hydrogen atom of an amino group with an alkyl group having 1 to 6 carbon atoms), an alkoxy group (preferably, an alkoxy group having 1 to 6 carbon atoms), an alkoxysilyl group (preferably, an alkoxysilyl group having 1 to 6 carbon atoms), and an amide group are preferable.

As the BR, products of Ube Industries, Ltd., JSR Corporation, Asahi Kasei Corporation, Zeon Corporation, etc., can be used.

In the case where the BR is contained, the amount of the BR in 100% by mass of the rubber component is preferably not less than 5% by mass, more preferably not less than 20% by mass, and further preferably not less than 35% by mass, and is preferably not greater than 60% by mass, more preferably not greater than 50% by mass, and further preferably not greater than 40% by mass. When the amount of the BR is within the above range, the effect tends to be more favorably achieved.

The rubber composition contains silica.

Examples of the silica include dry-process silica (silicic anhydride) and wet-process silica (hydrous silicic acid), but wet-process silica is preferable for the reason that it has a higher silanol group content. One of these types of silica may be used individually, or two or more of these types of silica may be used in combination.

The nitrogen adsorption specific surface area (N₂SA) of the silica only needs to be 200 to 250 m²/g, but is more preferably not less than 220 m²/g, and further preferably not less than 230 m²/g, and is preferably not greater than 240 m²/g. When the nitrogen adsorption specific surface area (N₂SA) of the silica is within the above range, the effect (especially, abrasion resistance improving effect) tends to be more favorably achieved.

The nitrogen adsorption specific surface area of the silica is a value measured by the BET method according to ASTM D3037-81.

As the silica, for example, products of Evonik Degussa, Rhodia, etc., can be used.

The amount of the silica per 100 parts by mass of the rubber component only needs to be 70 to 120 parts by mass, but is preferably not less than 90 parts by mass and more preferably not less than 100 parts by mass, and is preferably not greater than 110 parts by mass. When the amount of the silica is within the above range, the effect tends to be more favorably achieved.

The rubber composition contains a mercapto silane coupling agent. Accordingly, particularly favorable low fuel consumption performance can be obtained.

As the mercapto silane coupling agent, in addition to silane coupling agents having a mercapto group, a compound having a structure in which a mercapto group is protected by a protecting group (for example, a thioester) can also be used.

Examples of mercapto silane coupling agents include 3-mercaptopropyltrimethoxysilane, 3-mercaptopropyltriethoxysilane, 2-mercaptoethyltrimethoxysilane, 2-mercaptoethyltriethoxysilane, and a compound represented by the following formula (Si363, manufactured by Evonik Degussa GmbH). One of these mercapto silane coupling agents may be used individually, or two or more of these mercapto silane coupling agents may be used in combination.

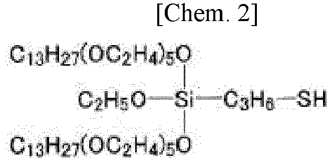

A particularly suitable mercapto silane coupling agent is a silane coupling agent that contains a bond unit A represented by Formula (I) below and a bond unit B represented by Formula (II) below. The silane coupling agent itself is in an oligomer state. Thus, when compared with the monomolecular mercapto silane coupling agents described above, a thicker gel layer is formed on the silica surface, and abrasion resistance and the like can be significantly improved. 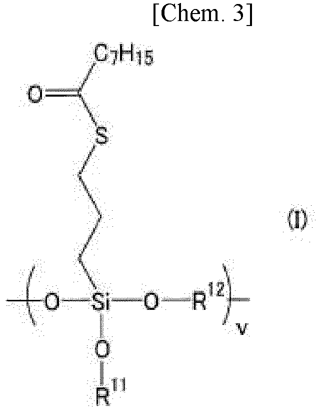 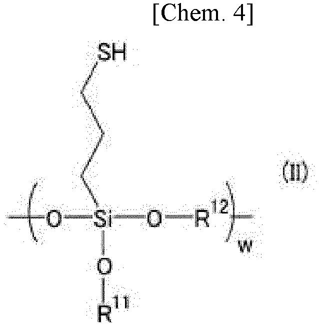 (where v is an integer not smaller than 0 and w is an integer not smaller than 1. R¹¹ represents hydrogen, a halogen, a branched or unbranched alkyl group having 1 to 30 carbon atoms, a branched or unbranched alkenyl group having 2 to 30 carbon atoms, a branched or unbranched alkynyl group having 2 to 30 carbon atoms, or the alkyl group in which hydrogen at an end thereof is substituted with a hydroxyl group or a carboxyl group. R¹² represents a branched or unbranched alkylene group having 1 to 30 carbon atoms, a branched or unbranched alkenylene group having 2 to 30 carbon atoms, or a branched or unbranched alkynylene group having 2 to 30 carbon atoms. R¹¹ and R¹² may form a ring structure.)

In the silane coupling agent that contains the bond unit A represented by Formula (I) and the bond unit B represented by Formula (II), the content of the bond unit A is preferably not less than 30% by mol and more preferably not less than 50% by mol, and is preferably not greater than 99% by mol and more preferably not greater than 90% by mol. The content of the bond unit B is preferably not less than 1% by mol, more preferably not less than 5% by mol, and further preferably not less than 10% by mol, and is preferably not greater than 70% by mol, more preferably not greater than 65% by mol, and further preferably not greater than 55% by mol. The total content of the bond units A and B is preferably not less than 95% by mol, more preferably not less than 98% by mol, and particularly preferably 100% by mol.

The content of the bond unit A, B is an amount that is applicable also when the bond unit A, B is located at the end in the silane coupling agent. The form of the bond unit A, B that is at the end of the silane coupling agent is not particularly limited as long as units are formed so as to correspond to Formula (I) and Formula (II) representing the bond units A and B.

With respect to R¹¹ in Formulas (I) and (II), examples of the halogen include chlorine, bromine, and fluorine. Examples of the branched or unbranched alkyl group having 1 to 30 carbon atoms include a methyl group and an ethyl group. Examples of the branched or unbranched alkenyl group having 2 to 30 carbon atoms include a vinyl group and a 1-propenyl group. Examples of the branched or unbranched alkynyl group having 2 to 30 carbon atoms include an ethynyl group and a propynyl group.

With respect to R¹² in Formulas (I) and (II), the branched or unbranched alkylene group having 1 to 30 carbon atoms include an ethylene group and a propylene group. Examples of the branched or unbranched alkenylene group having 2 to 30 carbon atoms include a vinylene group and a 1-propenylene group. The branched or unbranched alkynylene group having 2 to 30 carbon atoms include an ethynylene group and a propynylene group.

In the silane coupling agent that contains the bond unit A represented by Formula (I) and the bond unit B represented by Formula (II), the total number of repetitions (v+w) of the number of repetitions (v) of the bond unit A and the number of repetitions (w) of the bond unit B is preferably in the range of 3 to 300.

The amount of the mercapto silane coupling agent per 100 parts by mass of the silica is preferably not less than 3 parts by mass and more preferably not less than 6 parts by mass, and is preferably not greater than 15 parts by mass and more preferably not greater than 10 parts by mass. When the amount of the mercapto silane coupling agent is within the above range, the effect tends to be more favorably achieved.

The rubber composition contains a zinc dithiophosphate represented by Formula (1) below as a processing aid. Accordingly, gelling due to reaction between the rubber component and the mercapto silane coupling agent can be suppressed, and dispersion of the silica can be accelerated. 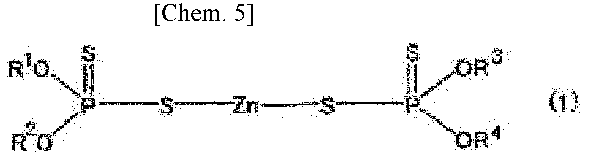 (where R¹ to R⁴ each independently represent a straight chain or branched chain alkyl group having 1 to 18 carbon atoms, or a cycloalkyl group having 5 to 12 carbon atoms.)

Examples of the straight chain or branched chain alkyl group represented by any one of R¹ to R⁴ in Formula (1) include a methyl group, an ethyl group, an n-propyl group, an iso-propyl group, an n-butyl group, a 4-methylpentyl group, a 2-ethylhexyl group, an octyl group, and an octadecyl group. Examples of the cycloalkyl group include a cyclopentyl group, a cyclohexyl group, and a cyclooctyl group. Among them, R¹ to R⁴ are each preferably a straight chain or branched chain alkyl group having 2 to 8 carbon atoms, more preferably an n-butyl group, an n-propyl group, an iso-propyl group, or an n-octyl group, and further preferably an n-butyl group, because they are easily dispersed in the rubber composition and are easily produced.

One of these zinc dithiophosphates may be used individually or two or more of these zinc dithiophosphates may be used in combination. As the zinc dithiophosphate, products of Rhein Chemie, etc., can be used.

The amount of the zinc dithiophosphate (the amount of active ingredient) per 100 parts by mass of the rubber component is preferably not less than 0.3 parts by mass and more preferably not less than 0.5 parts by mass, and is preferably not greater than 5 parts by mass, more preferably not greater than 2 parts by mass, and further preferably not greater than 1 part by mass. When the amount of the zinc dithiophosphate is within the above range, the effect tends to be more favorably achieved.

The rubber composition preferably contains a terpene-based resin.

The terpene-based resin is a polymer containing a terpene-based compound (terpene-based monomer) as a constituent monomer, and examples of the terpene-based resin include a polymer obtained by polymerization with a terpene-based compound as a main component (not less than 50% by mass). Specifically, a polyterpene resin obtained by polymerizing a terpene-based compound, an aromatic modified terpene resin obtained by polymerizing a terpene-based compound and an aromatic compound, hydrogenated products thereof, etc., can be used. One of these resins may be used individually, or two or more of these resins may be used in combination.

The terpene-based compounds are hydrocarbons represented by a composition of (C₅H₈)ₙ and oxygenated derivatives thereof, and are compounds having, as a basic backbone, a terpene classified into monoterpene (C₁₀H₁₆), sesquiterpene (C₁₅H₂₄), diterpene (C₂₀H₃₂), and the like. Examples of the terpene-based compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol. One of these terpene-based compounds may be used individually, or two or more of these terpene-based compounds may be used in combination.

Examples of the aromatic compound used for the aromatic modified terpene resin include styrene-based compounds such as styrene and α-methylstyrene, and phenol-based compounds such as phenol, bisphenol A, and cresol. One of these aromatic compounds may be used individually, or two or more of these aromatic compounds may be used in combination.

For the reason that the effect tends to be more favorably achieved, as the terpene-based resin, a polyterpene resin and an aromatic modified terpene resin (particularly, a copolymer of a terpene-based compound and a styrene-based compound) are preferable.

The softening point of the terpene-based resin is preferably not lower than 90°C and more preferably not lower than 110°C, and is preferably not higher than 150°C and more preferably not higher than 130°C. When the softening point of the terpene-based resin is within the above range, the effect tends to be more favorably achieved.

In the case where the terpene-based resin is contained, the amount of the terpene-based resin per 100 parts by mass of the rubber component is preferably not less than 5 parts by mass and more preferably not less than 10 parts by mass, and is preferably not greater than 30 parts by mass and more preferably not greater than 20 parts by mass. When the amount of the terpene-based resin is within the above range, the effect tends to be more favorably achieved.

The rubber composition may contain carbon black.

The carbon black is not particularly limited, and examples thereof include N134, N110, N220, N234, N219, N339, N330, N326, N351, N550, and N762. These carbon blacks may be used individually, or two or more of these carbon blacks may be used in combination.

The nitrogen adsorption specific surface area (N₂SA) of the carbon black is preferably not less than 80 m²/g and more preferably not less than 110 m²/g, and is preferably not greater than 200 m²/g and more preferably not greater than 150 m²/g. When the nitrogen adsorption specific surface area (N₂SA) of the carbon black is within the above range, the effect tends to be more favorably achieved.

The N₂SA of the carbon black is a value measured according to JIS K6217-2: 2001.

As the carbon black, products of Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used.

In the case where the carbon black is contained, the amount of the carbon black per 100 parts by mass of the rubber component is preferably not less than 5 parts by mass and more preferably not less than 10 parts by mass, and is preferably not greater than 30 parts by mass and more preferably not greater than 20 parts by mass. When the amount of the carbon black is within the above range, the effect tends to be more favorably achieved.

The rubber composition may contain an oil.

Examples of the oil include process oils, vegetable fats and oils, and mixtures thereof. As the process oil, for example, paraffinic process oil, aromatic process oil, or naphthenic process oil can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. These oils may be used individually, or two or more of these oils may be used in combination.

In the case where the oil is contained, the amount of the oil per 100 parts by mass of the rubber component is preferably not less than 5 parts by mass and more preferably not less than 10 parts by mass, and is preferably not greater than 30 parts by mass and more preferably not greater than 20 parts by mass. When the amount of the oil is within the above range, the effect tends to be more favorably achieved.

The rubber composition may contain a wax.

The wax is not particularly limited, and examples thereof include: petroleum waxes such as paraffin wax and microcrystalline wax; natural waxes such as vegetable waxes and animal waxes; and synthesized waxes such as polymers of propylene, ethylene, and the like. These waxes may be used individually, or two or more of these waxes may be used in combination.

As the wax, for example, products of Ouchi Shinko Chemical Industrial Co., Ltd., NIPPON SEIRO CO., LTD., Seiko Chemical Co., Ltd., etc., can be used.

In the case where the wax is contained, the amount of the wax per 100 parts by mass of the rubber component is preferably not less than 1 part by mass and more preferably not less than 1.5 parts by mass, and is preferably not greater than 20 parts by mass and more preferably not greater than 10 parts by mass. When the amount of the wax is within the above range, the effect tends to be more favorably achieved.

The rubber composition may contain an antioxidant.

Examples of the antioxidant include: naphthylamine-based antioxidants such as phenyl-α-naphthylamine; diphenylamine-based antioxidants such as octylated diphenylamine and 4,4'-bis(α,α'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., Sumitomo Chemical Co., Ltd., Ouchi Shinko Chemical Industrial Co., Ltd., Flexsys, etc., can be used.

In the case where the antioxidant is contained, the amount of the antioxidant per 100 parts by mass of the rubber component is preferably not less than 1 part by mass and more preferably not less than 2 parts by mass, and is preferably not greater than 10 parts by mass and more preferably not greater than 5 parts by mass. When the amount of the antioxidant is within the above range, the effect tends to be more favorably achieved.

The rubber composition may contain stearic acid.

As the stearic acid, a conventionally known one can be used, and, for example, products of NOF Corporation, Kao Corporation, FUJIFILM Wako Pure Chemical Corporation, New Japan Chemical Co., Ltd., etc., can be used.

In the case where stearic acid is contained, the amount of the stearic acid per 100 parts by mass of the rubber component is preferably not less than 1 part by mass and more preferably not less than 2 parts by mass, and is preferably not greater than 10 parts by mass and more preferably not greater than 5 parts by mass. When the amount of the stearic acid is within the above range, the effect tends to be more favorably achieved.

The rubber composition may contain zinc oxide.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

In the case where zinc oxide is contained, the amount of the zinc oxide per 100 parts by mass of the rubber component is preferably not less than 1 part by mass and more preferably not less than 2 parts by mass, and is preferably not greater than 10 parts by mass and more preferably not greater than 5 parts by mass. When the amount of the zinc oxide is within the above range, the effect tends to be more favorably achieved.

The rubber composition may contain sulfur.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, products of Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

In the case where sulfur is contained, the amount of the sulfur per 100 parts by mass of the rubber component is preferably not less than 0.5 parts by mass and more preferably not less than 1.5 parts by mass, and is preferably not greater than 10 parts by mass and more preferably not greater than 5 parts by mass. When the amount of the sulfur is within the above range, the effect tends to be more favorably achieved.

The rubber composition may contain a vulcanization accelerator.

Examples of the vulcanization accelerator include: thiazole-based vulcanization accelerators such as 2-mercaptobenzothiazole, di-2-benzothiazolyl disulfide, and N-cyclohexyl-2-benzothiazolylsulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; guanidine-based vulcanization accelerators such as diphenylguanidine, diorthotolylguanidine, and orthotolylbiguanidine; and dithiocarbamate-based vulcanization accelerators such as piperidinium pentamethylenedithiocarbamate (PPDC), zinc dimethyldithiocarbamate (ZnMDC), zinc diethyldithiocarbamate (ZnEDC), zinc dibutyldithiocarbamate (ZnBDC), zinc N-ethyl-N-phenyldithiocarbamate (ZnEPDC), zinc N-pentamethylenedithiocarbamate (ZnPDC), sodium dibutyldithiocarbamate (NaBDC), copper dimethyldithiocarbamate (CuMDC), ferric dimethyldithiocarbamate (FeMDC), and tellurium diethyldithiocarbamate (TeEDC). These may be used individually, or two or more of them may be used in combination. Among them, the thiuram-based vulcanization accelerators and the dithiocarbamate-based vulcanization accelerators are preferable, and the thiuram-based vulcanization accelerators are more preferable.

In the case where the vulcanization accelerator is contained, the amount of the vulcanization accelerator per 100 parts by mass of the rubber component is preferably not less than 1 part by mass and more preferably not less than 2 parts by mass, and is preferably not greater than 10 parts by mass and more preferably not greater than 5 parts by mass. When the amount of the vulcanization accelerator is within the above range, the effect tends to be more favorably achieved.

In addition to the above-described components, additives that are generally used in the tire industry, such as: organic peroxides; fillers such as calcium carbonate, talc, alumina, clay, aluminum hydroxide, and mica; and the like, may be further blended in the rubber composition. Each of the amounts of these additives per 100 parts by mass of the rubber component is preferably 0.1 to 200 parts by mass.

For example, the rubber composition can be produced by a method in which the above respective components are kneaded by a rubber kneading device and then vulcanization is performed.

As for the kneading conditions, in a base kneading step of kneading the additives other than a vulcanizing agent and the vulcanization accelerator, the kneading temperature is normally 100 to 180°C. However, from the viewpoint of improving the dispersibility of fine particle silica, kneading is preferably performed for about 1 to 5 minutes, with 130 to 165°C maintained. In a finish kneading step of kneading the vulcanizing agent and the vulcanization accelerator, the kneading temperature is normally not higher than 120°C and preferably 85 to 110°C. In addition, a composition obtained by kneading the vulcanizing agent and the vulcanization accelerator is normally subjected to vulcanization treatment such as press vulcanization. The vulcanization temperature is normally 140 to 190°C and preferably 150 to 185°C. The vulcanization time is normally 5 to 15 minutes.

The rubber composition is used for treads (cap treads).

The pneumatic tire of the present invention is produced by a normal method using the above rubber composition.

Specifically, an unvulcanized tire is formed by extruding the rubber composition in an unvulcanized state so as to correspond to the shape of a tread, and forming the extruded rubber composition together with other tire members on a tire forming machine by a general method. A tire is obtained by heating and pressurizing the unvulcanized tire in a vulcanizing machine.

The above pneumatic tire can be used as a tire for a passenger car, a tire for a truck or a bus, a tire for a two-wheeled automotive vehicle, a high-performance tire, and the like, and is particularly suitable as a tire for a passenger car.

### EXAMPLE

The present invention will be specifically described by means of examples, but the present invention is not limited to these examples.

Various chemicals used in Examples and Comparative Examples are described below.
SBR: SL552 (solution-polymerized SBR, styrene content: 23.5% by mass, vinyl content: 33.5% by mass, Mw: 520000) manufactured by JSR CORPORATION.
BR1: modified BR (cis content: 36% by mass, trans content: 52% by mass, vinyl content: 12% by mass, Mw: 550000) produced in the production example below.
BR2: BR150B (cis content: 97% by mass) manufactured by Ube Industries, Ltd.
Carbon black: Diablack N220 (N₂SA: 114 m²/g) manufactured by Mitsubishi Chemical Corporation.
Silica 1: Ultrasil VN3 (N₂SA: 175 m²/g) manufactured by Evonik Degussa GmbH.
Silica 2: Ultrasil 9000GR (N₂SA: 240 m²/g) manufactured by Evonik Degussa GmbH.
Silane coupling agent 1: NXT-Z45 (a copolymer of bond unit A and bond unit B (bond unit A: 55% by mol, bond unit B: 45% by mol)) manufactured by Momentive.
Silane coupling agent 2: Si266 (bis(3-triethoxysilylpropyl)disulfide) manufactured by Evonik Degussa GmbH.
Resin: YS Resin TO125 (aromatic modified terpene resin (a copolymer of terpene compound and styrene), softening point: 125°C) manufactured by Yasuhara Chemical Co., Ltd.
Oil: A/O Mix manufactured by Sankyo Yuka Kogyo K.K.
Zinc dithiophosphate: TP-50 (R¹ to R⁴ in Formula (1) are n-butyl groups, active ingredient: 50% by mass) manufactured by Rhein Chemie.
Zinc oxide: Zinc Oxide No. 1 manufactured by Mitsui Mining & Smelting Co., Ltd.
Stearic acid: stearic acid manufactured by NOF Corporation.
Antioxidant: Nocrac 6C (N-(1,3-dimethylbutyl)-N'-phenyl-p-phenylenediamine) manufactured by Ouchi Shinko Chemical Industrial Co., Ltd.
Sulfur: powdery sulfur manufactured by Tsurumi Chemical Industry Co., Ltd.
Vulcanization accelerator 1: Nocceler CZ (N-cyclohexyl-2-benzothiazolylsulfenamide) manufactured by Ouchi Shinko Chemical Industrial Co., Ltd.
Vulcanization accelerator 2: Nocceler D (1,3-diphenylguanidine) manufactured by Ouchi Shinko Chemical Industrial Co., Ltd.
Vulcanization accelerator 3: SANCELER TBZTD (tetrabenzylthiuram disulfide (TBzTD)) manufactured by SANSHIN CHEMICAL INDUSTRY CO., LTD.

### (Production example)

3-dimethylaminopropyl trimethoxysilane was put into a measuring flask in a nitrogen atmosphere, and hexanoic anhydride was added thereto, to produce an end modifier.

N-hexane, butadiene, and TMEDA were added in a pressure resistant vessel sufficiently purged with nitrogen, and the temperature of the mixture was increased to 60°C. Next, butyllithium was added to the mixture, then the temperature of the mixture was increased to 50°C, and the mixture was stirred for 3 hours. Next, the above end modifier was added to the mixture, and the mixture was stirred for 30 minutes. Methanol and 2,6-tert-butyl-p-creso were added to the reaction solution, and then the reaction solution was put into a stainless-steel vessel containing methanol to collect aggregates. The obtained aggregates were dried under reduced pressure for 24 hours to obtain a modified BR (BR1).

### (Examples and Comparative Examples)

In accordance with each of the blending formulas shown in Table 1, the chemicals other than the sulfur and the vulcanization accelerator were kneaded under a condition of 150°C for 5 minutes using a 1.7-L Banbury mixer manufactured by Kobe Steel, Ltd., to obtain a kneaded product.

Next, the sulfur and the vulcanization accelerator were added to the obtained kneaded product, and the mixture was kneaded under a condition of 80°C for 5 minutes using an open roll, to obtain an unvulcanized rubber composition.

The obtained unvulcanized rubber composition was formed into the shape of a tread and attached together with other tire members to produce an unvulcanized tire, and the unvulcanized tire was vulcanized under a condition of 150°C for 12 minutes, to produce a test tire (size: 195/65R15). The obtained test tire was used to perform the evaluation below. The results are shown in Table 1.

### (Tanδ peak temperature)

With respect to a test piece cut out from the tread of each test tire, tanδ in a temperature range of-100 to 100 was measured by use of a viscoelasticity spectrometer VES (manufactured by Iwamoto Seisakusho) under the conditions of an initial strain of 10%, an amplitude of ±0.5%, a frequency of 10 Hz, and a temperature rise rate of 2°C/min. The tanδ peak temperature was obtained from the obtained temperature distribution curve.

### (50°C tanδ, 0°C tanδ)

With respect to a test piece cut out from the tread of each test tire, tanδ at 50°C (50°C tanδ) and tanδ at 0°C (0°C tanδ) were measured by use of a viscoelasticity spectrometer VES (manufactured by Iwamoto Seisakusho) under the conditions of an initial strain of 10%, an amplitude of ±0.5%, and a frequency of 10 Hz.

### (Low fuel consumption performance)

Rolling resistance was measured by use of a rolling resistance testing machine while each test tire was caused to run under the conditions of a rim (15×6JJ), an internal pressure (230 kPa), a load (3.43 kN), and a speed (80 km/h). The measured rolling resistance was indicated as an index with the rolling resistance of Comparative Example 1 set as 100 (low fuel consumption performance index). A higher index represents a lower rolling resistance and indicates that the low fuel consumption performance is better. An index not less than 80 is favorable.

### (Wet grip performance)

The respective test tires were mounted to all the wheels of a vehicle (a front wheel drive vehicle with an engine displacement of 2000 cc, produced in Japan), and a braking distance from an initial speed of 100 km/h was obtained on a wet asphalt road surface. The braking distance is indicated as an index with the braking distance of Comparative Example 1 set as 100 (wet grip performance index). A higher index indicates that the braking distance is shorter and the wet grip performance is better. An index not less than 90 is favorable.

### (Abrasion resistance)

A volume loss amount of a test piece cut out from the tread of each test tire was measured by use of a LAT tester (Laboratory Abrasion and Skid Tester) under the conditions of a load of 40 N, a speed of 20 km/h, and a slip angle of 5°. The volume loss amount was indicated as an index with the volume loss amount of Comparative Example 1 set as 100 (abrasion resistance index). A higher index indicates that the volume loss amount is smaller and the abrasion resistance is better.

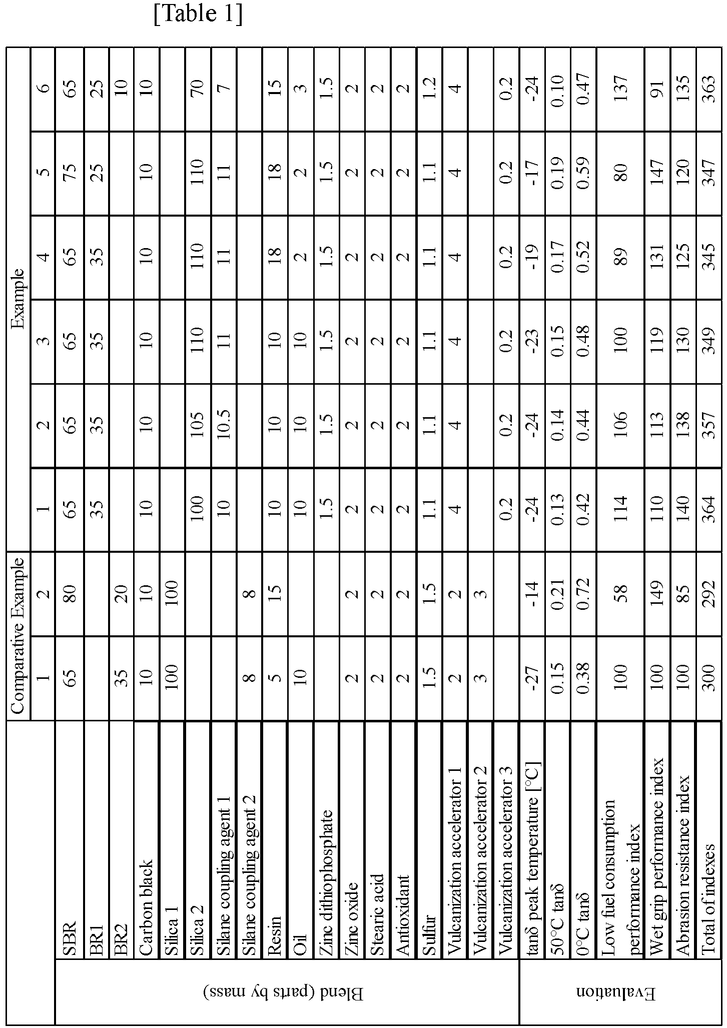

As shown in Table 1, Examples which each contain the rubber component, and a predetermined amount of a silica having a nitrogen adsorption specific surface area in a specific range, and in each of which tanδ peak temperature, tanδ at 50°C and tanδ at 0°C are in specific ranges, have comprehensively improved low fuel consumption performance, wet grip performance, and abrasion resistance when compared with those of Comparative Example 1.

Provided is a rubber composition, for a tread, capable of comprehensively improving low fuel consumption performance, wet grip performance, and abrasion resistance, and a pneumatic tire using the same. The present invention relates to a rubber composition for a tread, the rubber composition containing: a rubber component; and a silica having a nitrogen adsorption specific surface area of 200 to 250 m²/g, wherein an amount of the silica per 100 parts by mass of the rubber component is 70 to 120 parts by mass, the rubber composition contains a mercapto silane coupling agent and a zinc dithiophosphate represented by Formula (1) above, where R¹ to R⁴ each independently represent a straight chain or branched chain alkyl group having 1 to 18 carbon atoms, or a cycloalkyl group having 5 to 12 carbon atoms, tan6 peak temperature is -25 to -15°C, tanδ at 50°C is 0.10 to 0.25, and tanδ at 0°C is 0.35 to 0.90.

## Claims

1. A rubber composition for a tread, the rubber composition containing: a rubber component; and a silica having a nitrogen adsorption specific surface area of 200 to 250 m²/g as measured by the BET method according to ASTM D3037-81, wherein
an amount of the silica per 100 parts by mass of the rubber component is 70 to 120 parts by mass,
the rubber composition contains a mercapto silane coupling agent and a zinc dithiophosphate represented by Formula (1) below, 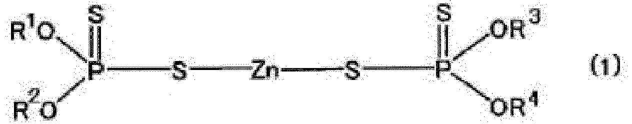
where R¹ to R⁴ each independently represent a straight chain or branched chain alkyl group having 1 to 18 carbon atoms, or a cycloalkyl group having 5 to 12 carbon atoms,
a tanδ peak temperature determined according to the description is -25 to -15°C,
tanδ at 50°C determined according to the description is 0.10 to 0.25, and
tanδ at 0°C determined according to the description is 0.35 to 0.90.

2. The rubber composition for a tread according to claim 1, wherein
an amount of a butadiene rubber having a cis content of not greater than 50% by mass is 5 to 60% by mass in 100% by mass of the rubber component.

3. The rubber composition for a tread according to claim 1 or 2, wherein
an amount of the zinc dithiophosphate represented by Formula (1) per 100 parts by mass of the rubber component is 0.3 to 5 parts by mass.

4. The rubber composition for a tread according to any one of claims 1 to 3, wherein
the rubber composition contains a thiuram-based vulcanization accelerator and/or a dithiocarbamate-based vulcanization accelerator.

5. The rubber composition for a tread according to any one of claims 1 to 4, wherein
the rubber composition contains a terpene-based resin.

6. A pneumatic tire having a tread formed by the rubber composition according to any one of claims 1 to 5.

## Patentansprüche

1. Kautschukzusammensetzung für eine Lauffläche, wobei die Kautschukzusammensetzung enthält: eine Kautschukkomponente; und ein Siliciumoxid mit einer spezifischen Stickstoffadsorptionsoberfläche von 200 bis 250 m²/g, wie durch das BET Verfahren nach ASTM D3037-81 gemessen, wobei
eine Menge des Siliciumoxids pro 100 Masseteile der Kautschukkomponente 70 bis 120 Masseteile beträgt,
die Kautschukzusammensetzung ein Mercaptosilankupplungsmittel und ein durch die folgende Formel (1) dargestelltes Zinkdithiophosphat enthält; 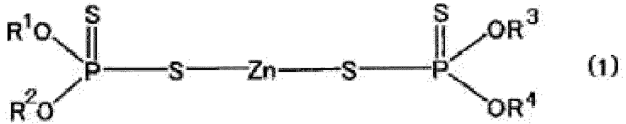
wobei R¹ bis R⁴ jeweils unabhängig voneinander eine geradkettige oder verzweigtkettige Alkylgruppe mit 1 bis 18 Kohlenstoffatomen oder eine Cycloalkylgruppe mit 5 bis 12 Kohlenstoffatomen darstellen,
eine gemäß der Beschreibung bestimmte tanδ-Peaktemperatur -25 bis -15°C beträgt,
tanδ bei 50°C, bestimmt gemäß der Beschreibung, 0,10 bis 0,25 beträgt, und
tanδ bei 0°C, bestimmt gemäß der Beschreibung, 0,35 bis 0,90 beträgt.

2. Kautschukzusammensetzung für eine Lauffläche nach Anspruch 1, wobei
eine Menge eines Butadienkautschuks, der einen cis-Gehalt von nicht mehr als 50 Masse-% aufweist, 5 bis 60 Masse-% in 100 Masse-% der Kautschukkomponente beträgt.

3. Kautschukzusammensetzung für eine Lauffläche nach Anspruch 1 oder 2, wobei
eine Menge des durch die Formel (1) dargestellten Zinkdithiophosphats pro 100 Masseteile der Kautschukkomponente 0,3 bis 5 Masseteile beträgt.

4. Kautschukzusammensetzung für eine Lauffläche nach einem der Ansprüche 1 bis 3, wobei
die Kautschukzusammensetzung einen Vulkanisationsbeschleuniger auf Thiurambasis und/oder einen Vulkanisationsbeschleuniger auf Dithiocarbamatbasis enthält.

5. Kautschukzusammensetzung für eine Lauffläche nach einem der Ansprüche 1 bis 4, wobei
die Kautschukzusammensetzung ein Harz auf Terpenbasis enthält.

6. Luftreifen mit einer Lauffläche, die aus der Kautschukzusammensetzung nach einem der Ansprüche 1 bis 5 gebildet ist.

## Revendications

1. Composition de caoutchouc pour une bande de roulement, la composition de caoutchouc contenant : un composant en caoutchouc ; et une silice ayant une surface spécifique d'adsorption d'azote de 200 à 250 m²/g mesurée par la méthode BET conformément à la norme ASTM 03037-81, dans laquelle
une quantité de silice pour 100 parties en masse du composant en caoutchouc est de 70 à 120 parties en masse,
la composition de caoutchouc contient un agent de couplage mercapto silane et un dithiophosphate de zinc représenté par la formule (1) ci-dessous, 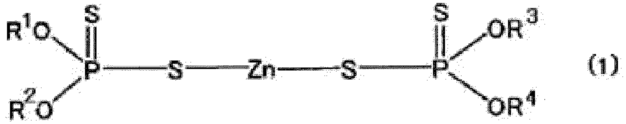
où R1 à R4 représentent chacun indépendamment un groupe alkyle à chaîne linéaire ou chaîne ramifiée ayant de 1 à 18 atomes de carbone, ou un groupe cycloalkyle ayant de 5 à 12 atomes de carbone,
une température de pic tanδ déterminée selon la description est comprise entre -25 et -15°C,
tanδ à 50°C déterminé selon la description est de 0,10 à 0,25, et
tanδ à 0°C déterminé selon la description est de 0,35 à 0,90.

2. Composition de caoutchouc pour une bande de roulement selon la revendication 1, dans laquelle
une quantité d'un caoutchouc butadiène ayant une teneur en cis ne dépassant pas 50 % en masse est de 5 à 60 % en masse dans 100 % en masse du composant en caoutchouc.

3. Composition de caoutchouc pour une bande de roulement selon la revendication 1 ou 2, dans laquelle
une quantité de dithiophosphate de zinc représenté par la formule (1) pour 100 parties en masse du composant en caoutchouc est de 0,3 à 5 parties en masse.

4. Composition de caoutchouc pour une bande de roulement selon l'une quelconque des revendications 1 à 3, dans laquelle
la composition de caoutchouc contient un accélérateur de vulcanisation à base de thiurame et/ou un accélérateur de vulcanisation à base de dithiocarbamate.

5. Composition de caoutchouc pour une bande de roulement selon l'une quelconque des revendications 1 à 4, dans laquelle
la composition de caoutchouc contient une résine à base de terpène.

6. Pneumatique comportant une bande de roulement formée par la composition de caoutchouc selon l'une quelconque des revendications 1 à 5.
